# EUROPEAN PATENT SPECIFICATION

(11) **EP 2 062 124 B1**
(45) Date of publication and mention of the grant of the patent: **27.03.2013**
(21) Application number: 06790612.3
(22) Date of filing: 31.08.2006
(51) Int. Cl.: G06F 3/14, G06F 15/02, H04L 12/54, H04M 1/725

(54) **CONTROLLING A MESSAGE DISPLAY IN AN ELECTRONIC DEVICE**
STEUERUNG EINER NACHRICHTENANZEIGE IN EINEM ELEKTRONISCHEN GERÄT
COMMANDE DE L'AFFICHAGE D'UN MESSAGE DANS UN DISPOSITIF ÉLECTRONIQUE

(43) Date of publication of application: 27.05.2009
(73) Proprietor: Research In Motion Limited, Waterloo, ON N2L 3W8 (CA)
(72) Inventor: ZINN, Ronald Scotte, Waterloo, Ontario N2L 5T9 (CA)
(74) Representative: MERH-IP Matias Erny Reichl Hoffmann
(86) International application number: PCT/CA2006/001434
(87) International publication number: WO 2008/025119

(56) References cited:
- EP-A- 0 949 559
- EP-A- 1 669 914
- WO-A2-00/54177
- US-A1- 2001 030 663
- US-A1- 2003 078 982
- US-A1- 2004 038 705
- US-B1- 6 684 088
- LEE H.-W. ET AL: 'Integrated Multimedia E-mail Handler with Authoring Tool' HIGH PERFORMANCE COMPUTING ON THE INFORMATION SUPERHIGHWAY HPC ASIA 28 April 1997 - 02 May 1997, pages 517 - 522, XP010224957

## Description

### FIELD OF TECHNOLOGY

The present disclosure relates to electronic mail and to the control of a display of messages in an electronic device.

### BACKGROUND

Portable electronic devices including, for example, smart telephones and wireless PDAs are becoming increasingly common and typically integrate functions of personal information management such as calendaring, data communications such as email, World Wide Web browsing and telecommunications in a single device. Such devices run on a wide variety of networks from data-only networks such as Mobitex and DataTAC to complex voice and data networks such as GSM/GPRS, CDMA, EDGE, UMTS AND CDMA2000 networks.

Portable electronic devices include a visual display such as a liquid crystal display (LCD) screen for presenting information to the user of the device. Of course, for many portable electronic devices, the size of the LCD screen is small so that the portable electronic device is handheld and is easily transported in, for example, a user's pocket. The displays of these handheld devices are used for displaying information to the user in the form of, for example, menus, lists and text displays. Many devices with electronic mail functionality, such as the device disclosed in EP1669914, provide a list of email message headers representing email messages sent from and/or received at the portable electronic device upon user selection of an email option from a menu screen. Each email header in these lists typically provides, for example, an indication of the status of the message to which the header relates, the time of the message, an address field and a subject field for the message. Of course with the limited size of the display screen, it is common that only portions of the address and subject fields are displayed.

The display of content on these devices is often customizable such that display attributes including font type and font size is user-selectable. To ensure that sufficient characters of the address and subject fields are displayed in an email header list so that the user is provided with some context relating to the message, the user is left to reduce the font size for display. With the reduction of font size, more characters can be displayed in each line of the list. For users who desire larger font sizes, often very little information regarding individual messages can be determined from the email header list.

### SUMMARY

According to one aspect, there is proviced a method of controlling a display of an electronic device for displaying a list of electronic messages as defined in claim 1.

According to another aspect, there is provided an electronic device as defined in claim 11.

According to yet another aspect, there is provided a computer program product for displaying an electronic message in a list on a display of an electronic device as defined in claim 12.

Advantageously, when there is not enough room for one of the fields of a message header, more room is made available for this field. This is accomplished by automatically switching from a single line in the display to multiple lines. This switching provides a larger space for address and subject fields of the message header. When a message header is switched to multiple lines of the display, a large portion of the screen width is provided for displaying an address field on the first line of the message header. Similarly, a large portion of the screen width is provided for displaying a subject field on a second line of the message header. In another advantage, the address and subject fields can be aligned when it is determined that sufficient space is provided and can automatically be switched such that the subject field is provided more space, thereby moving the subject field to the left, out of alignment with the address field if the subject field does not fit in the space provided when in alignment.

### BRIEF DESCRIPTION OF THE DRAWINGS

The embodiments described herein will be better understood with reference to the following Figures, in which:

Figure 1 is an overview of an exemplary communication system in which a portable electronic device according to one embodiment can be used;

Figure 2 is a front view of an exemplary portable electronic device;

Figure 3 is a block diagram of certain components, including internal components within the portable electronic device of Figure 2;

Figure 4 is an exemplary menu screen displayed on a display of the portable electronic device of Figure 2;

Figure 5 is an exemplary list of email messages displayed on the display of the portable electronic device of Figure 2;

Figure 6 is a flowchart showing the steps in a method.for controlling a display in an electronic device according to an embodiment;

Figure 7 is an exemplary screen showing a message list displayed on the display of the portable electronic device;

Figure 8 is another exemplary screen showing a message list displayed on the display of the portable electronic device;

Figure 9A is an exemplary menu screen showing user options for email;

Figure 9B is an exemplary submenu showing user options for display of the email message header list;

Figure 10 is yet another exemplary screen showing a message list displayed on the display of the portable electronic device;

Figure 11 is still another exemplary screen showing a message list displayed on the portable electronic device; and

Figure 12 is a front view of another exemplary portable electronic device.

### DETAILED DESCRIPTION OF THE EMBODIMENTS

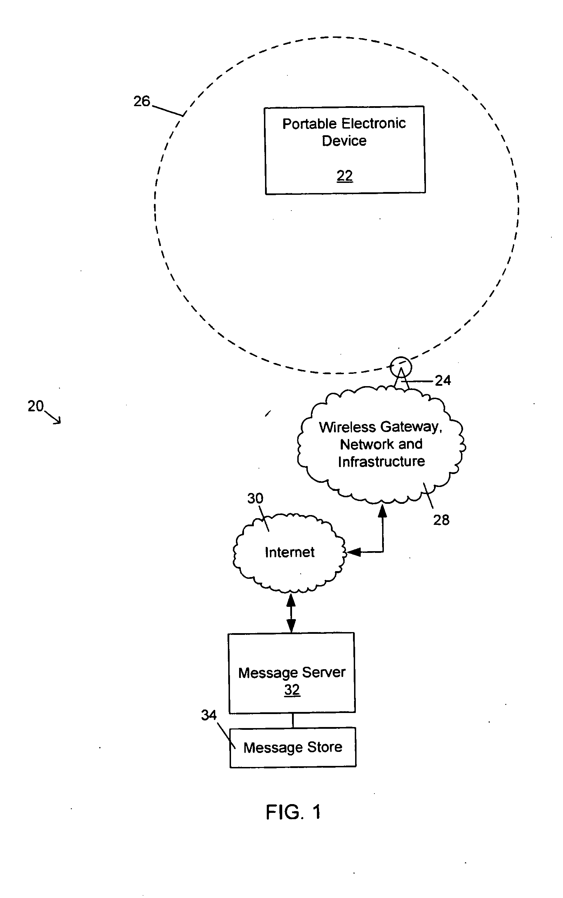

Reference is first made to Figure 1 which shows an overview of an exemplary communication system in which a portable electronic device 22 can be used. The communication system is indicated generally by the numeral 20 and the exemplary portable electronic device is indicated by the numeral 22. The communication system 20 provides for communications with portable electronic devices including the exemplary portable electronic device 22, as shown. The portable electronic device 22 and the communication system 20 are operable to effect communications over a radio communications channel therebetween. Data originating at the portable electronic device 22 is communicated to the communication system 20 by way of the radio communications channel. Similarly, data originating at the communication system 20 is communicated from the communication system 20 to the portable electronic device 22 by way of the radio communications channel, thereby providing data to the portable electronic device 22.

For the purpose of illustration, the communication system 20 is functionally represented in Figure 1 and a single base station 24 is shown. The base station 24 defines a coverage area, or cell 26 within which communications between the base station 24 and the portable electronic device 22 can be effectuated. It will be appreciated that the portable electronic device 22 is movable within the cell 26 and can be moved to coverage areas defined by other cells that are not illustrated in the present example. The communication system 20 includes a base station 24 that is part of a wireless network and infrastructure 28 that provides a link to the portable electronic device 22. The wireless network and infrastructure 28 includes a number of base stations (not shown) that provide the other cells referred to above. Data is delivered to the portable electronic device 22 via wireless transmission from the base station 24. Similarly, data is sent from the portable electronic device 22 via wireless transmission to the base station 24.

Wireless networks and infrastructures include, for example, data-centric wireless networks, voice-centric wireless networks, or dual-mode wireless networks. For the purpose of the present exemplary embodiment, the wireless network and infrastructure 28 includes a dual-mode wireless network that supports both voice and data communications over the same physical base stations.

The wireless network and infrastructure 28 is connected through the Internet 30 to a message server 32, to thereby provide a link between the message server 32 and the portable electronic device 22. An email message is sent by an email sender connected somewhere to the Internet 30. Such email messages typically use traditional Simple Mail Transfer Protocol (SMTP), RFC 822 headers and Multipurpose Internet Mail Extension (MIME) parts to define the format of the email message. These techniques are known and are well understood by those skilled in the art. The email message arrives at the message server 32 and is stored in a message store 34. Many messaging systems rely on a "pull" system in which the portable electronic device requests that stored messages be forwarded by the message server 32 to the portable electronic device 22. On the other hand, in some systems, such messages are automatically forwarded by the message server 32 to the portable electronic device. Regardless of the system, the email is delivered to the portable electronic device 22 (either by automatic forwarding or by request).

Similarly, an email message sent from the portable electronic device 22 is sent to the message server 32, through the wireless gateway, network and infrastructure and the Internet. The message server 32 receives the email message and forwards the email message on based on the addressee.

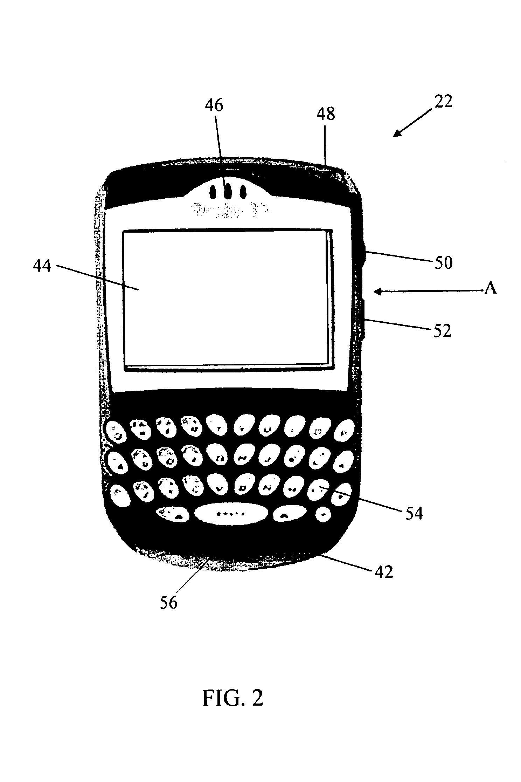

Referring now to Figure 2, there is shown an exemplary portable electronic device 22 for message display in accordance with an embodiment. In the present embodiment, the portable electronic device 22 is based on the computing environment and functionality of a hand-held wireless communication device. It will be understood, however, that the portable electronic device 22 is not limited to a hand-held wireless communication device. Other portable electronic devices are possible, such as cellular telephones, smart telephones, and laptop computers. Referring again to the present embodiment, the portable electronic device 22 includes a housing 42 that frames an LCD display 44, a speaker 46, an LED indicator 48, a trackwheel 50 or trackball (not shown), an exit key 52, a key pad 54, and a microphone 56. The trackwheel 50 and the exit key 52 can be inwardly depressed along the path of arrow "A" as a means to provide additional user-input. The housing 42 is made from a suitable material as will occur to those skilled in the art, and can be stored, for example, in a holster (not shown) that includes an attachment for attaching to a user's belt.

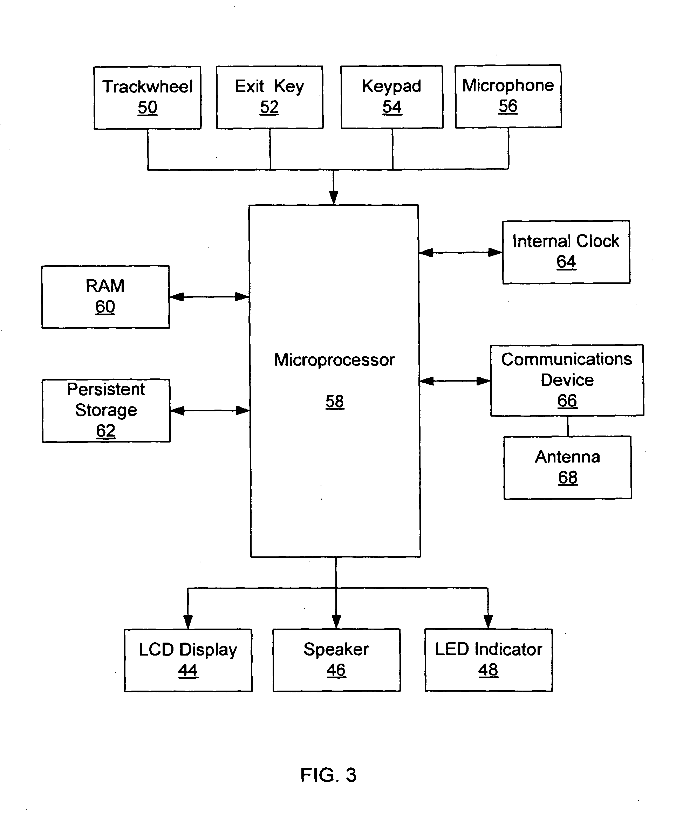

Referring now to Figure 3, a block diagram of certain components, including internal components within the portable electronic device 22, is shown. The portable electronic device 22 is based on a microcomputer that includes a microprocessor 58 connected to a random access memory (RAM) unit 60 and a persistent storage device 62 that is responsible for various non-volatile storage functions of the portable electronic device 22. Operating system software executable by the microprocessor 58 is stored in the persistent storage device 62, which in the present embodiment is flash memory. It will be appreciated, however, that the operating system software can be stored in other types of memory such as read-only memory (ROM). The microprocessor 58 receives input from various input devices including the trackwheel 50, the exit key 52, and the keypad 54, and outputs to various output devices including the LCD display 44, the speaker 46 and the LED indicator 48. The microprocessor 58 is also connected to an internal clock 64.

In the present embodiment, the portable electronic device 22 is a two-way RF communication device having voice and data communication capabilities for communication with the communications system 20 as referred to above. Two-way RF communication is facilitated by a communications device 66 that is used to connect to and operate with the communication system 20, via the antenna 68.

For data communication, signals are received, for example, an email message, at the communications device 66, processed and sent to the microprocessor 58 where the signals are further processed for display on the LCD display 44. Data, such as an email message can also be composed using one or more of the input devices such as the key pad 54 or the trackwheel 50. The data is sent through the communications device 66 to the network to which the portable electronic device 22 connects.

Although not shown, a battery provides power to all active elements of the portable electronic device 22.

The persistent storage device 62 also stores a plurality of applications executable by the microprocessor 58 that enable the portable electronic device 22 to perform certain operations including the communication operations referred to above. Other applications software is provided including, for example, an email application, a Web browser application, an address book application, calendar applications, a profiles application, and others.

It will be appreciated that email messages are received at the portable electronic device 22 by data communication through the communication system 20 referred to above. Email messages are also sent from the portable electronic device 22 by data communication through the communication system 20 referred to above. Each email message that is received and that is sent includes a variety of information including a date, a time, address information, subject information, a priority indication, and an email body.

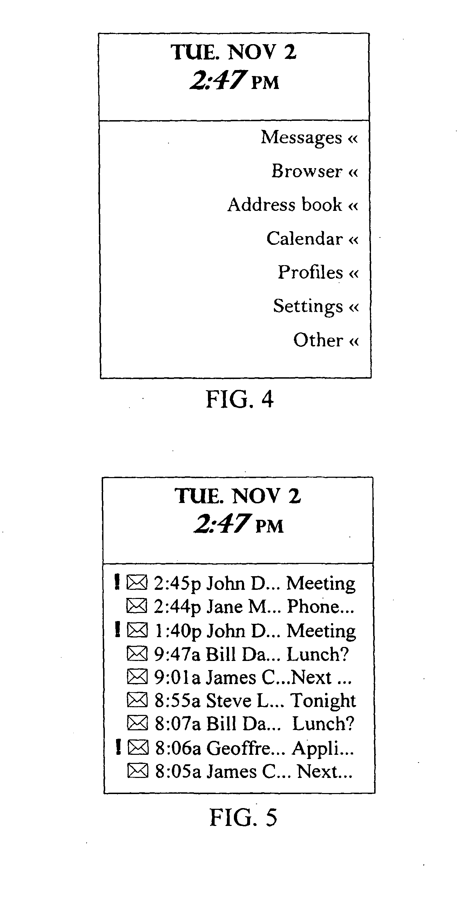

Referring to Figure 4, there is shown an exemplary menu screen that is displayed on the LCD display 44 of the portable electronic device 22. The exemplary menu screen includes a display clock that is updated according to the internal clock 64, and applications including an email messaging application, a Web browser, an Address book, and a Calendar application. A Settings option and an Other option are also provided. Each of the displayed applications are selectable by, for example, scrolling to the desired application using the trackwheel 50 and pressing inwardly on the trackwheel 50 in the direction of arrow "A".

Selection of the email messaging application causes execution of the email messaging application by the microprocessor 58 and a list of email messages is displayed including previously sent and received, opened and unopened email messages that remain stored on the portable electronic device 22. It will be appreciated that the list of email messages displayed on the portable electronic device 22 is not limited to all messages sent and received that remain on the portable electronic device 22. It is possible that the list of sent email messages and received email messages are displayed in separate lists and that only one of these lists, such as the list of email messages received at the portable electronic device 22, is displayed upon selection of the email message application. The list of email messages is referred to as the list of email headers. Each email message that is sent from the portable electronic device 22 and received at the portable electronic device 22 is represented by a header in the list. An exemplary list of email messages sent and received is shown in Figure 5. It will be appreciated that email headers typically include priority information, the time, address information and subject information, as shown in Figure 5. The email header is not limited to this information. Other information can also be displayed in each email header. It will be appreciated that the attributes of the email header are user-selectable for user selection of, for example, a font size, font and colour for display.

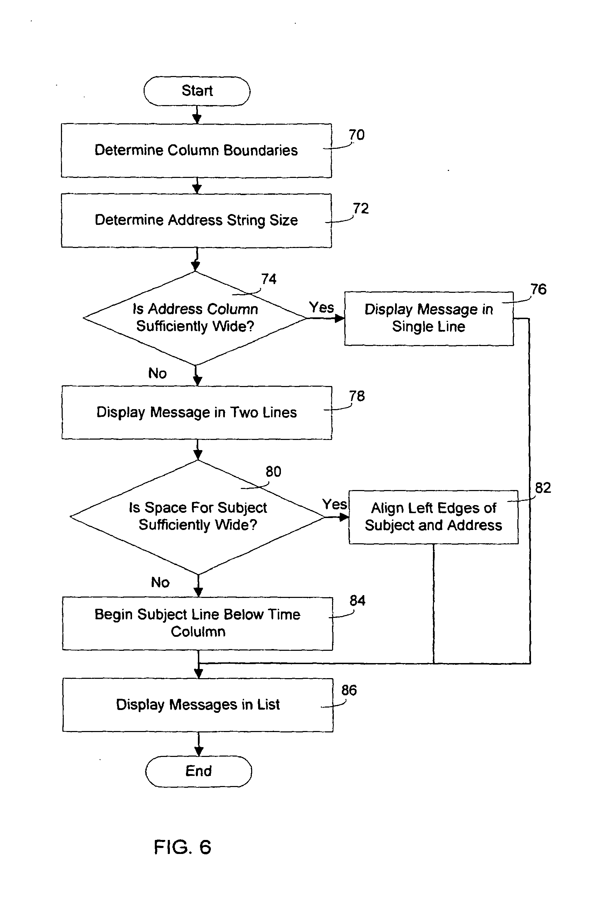

Reference is now made to Figure 6 to describe an embodiment of the present application. It will be appreciated that each of the steps of Figure 6 are carried out by routines and subroutines of software executed by the microprocessor 58. Coding of software for carrying out the steps in Figure 6 is well within the scope of a person of ordinary skill in the art. In the present embodiment, each email header includes fields that indicate the priority, status (opened or unopened), time, address information and subject information. It will be appreciated that portions of, for example the address field or the subject field or both the address and subject fields are not shown due to the length of the strings for display or due to the font size chosen for display in the email header list. Columns define the designated space for display of each of the fields of an email header. Thus, the screen of the LCD display 44 is divided into columns in which respective fields of the email header are displayed.

According to the present embodiment, the priority, the status and the time for each email are always displayed in full on the portable electronic device 22. Thus, the columns designated for the priority, the status and time for each email in the header list varies depending on font size chosen for the display. Therefore the space remaining for display of the address field and the subject field also varies. Clearly the width of each designated space for each field is dependent on the size of the font chosen. With large fonts, the column widths for the address and subject fields are smaller as the column width for the time field, for example, is larger to show the time in full.

Upon selection of the "Other" option of the exemplary menu screen of Figure 4, the user is presented with a number of possible options. Options provided include display options for font attributes including font family, font size and font style. Other options can also be provided. Upon selection of the font family, the user is provided with a number of different font types to choose from. Similarly, upon selection of the font size, the user is provided with a number of different font sizes to choose from. Upon selection of the font style option, the user is provided with a number of different font styles, such as normal, bold, extra bold, italic and others. It will be appreciated that a change in font size results in a change in the column width for the address and subject fields, with larger fonts leading to smaller column width. Similarly, changes in font family or font style can also result in changes to the column width for the address and subject fields in the email list.

With changes to any one of these options of font family, font size and font style, the microprocessor 58 executes a process to determine the display characteristics for the email header list. First, the boundaries for each column of the email headers are determined based on the user-selected font attributes chosen for display (step 70). The process can also be executed by the microprocessor 58 at any other suitable time, such as at start up of the portable electronic device 22.

Next, the microprocessor 58 determines the width of a test case string for the address column (step 72). Any suitable string can be used for a test case. For example, the string chosen can be "Suitable?". The width of the test case string for the email message is then compared to the width of the address column based on the boundaries determined at step 70, and a decision as to how to display the email message header is made (step 74). In other words, it is determined whether the column width is sufficient for the test case, "Sufficient?", to fit within the column provided. If the width of the test case string is smaller to or equal to the width of the address column, then the decision is made to display the email message headers in a single line of the email message header list (step 76). Thus, when the test case string fits within the designated column space, the email message header is displayed on a single line in the list. On the other hand, if the width of the test case string is larger than the width of the address column, a decision is made to display each of the email message headers on two lines in the list (step 78). Thus, if the test case string does not fit within the designated column space, each of the email message headers is displayed on two lines in the list.

When a decision is made to display each of the message headers on two lines in the list, the subject column is moved to the second line for each of the email headers while the priority, the status, the time and the address are displayed in the first line of the email header. Thus, the width of the designated space for display of the address field is effectively increased to the remainder of the width of the display 44 (full width minus the width of the columns for priority, status, and time). Thus, the address column left edge remains the same, while the address column right edge on the display 44 is extended to the right edge of the display 44.

In the present embodiment, the subject column is indented on the second line of the display. This allows the user to more clearly distinguish between email message headers in the list. The left edge of the second line of each email message header is determined based on the left edge of the address column in the first line of the email message header. The left edge of the address column in the first line of the email message header is compared to the full display width, and a determination is made based on this comparison (step 80). If the left edge of the address column falls within a first predetermined portion of the display 44, the left edge of the subject field space is aligned with the left edge of the address field space (Step 82). In the present embodiment, the left edge of the subject field space is aligned with the left edge of the address field space if the left edge of the address field space falls within, for example, the first (left) 30 percent of the display 44. It will be appreciated that 30 percent is used for exemplary purposes only, and that any suitable percentage or a measurement in pixels can be used.

If, on the other hand, the left edge of the address field space does not fall within the first predetermined portion of the display 44, the left edge of the subject field space is, for example, aligned with the midpoint of the time field column in the first line of the message header (step 84). It will be appreciated that user selection of a very large font for display results in the left edge of the address field space falling outside the first predetermined portion of the display 44. Thus, the left edge of the subject field space is shifted left to provide more space for the subject field for each message header.

When the email message header list is provided to the user, for example, upon selection of the email messaging application from the menu screen shown in Figure 4, each of the email message headers are displayed (step 86) in accordance with the determinations made at steps 74 and 80.

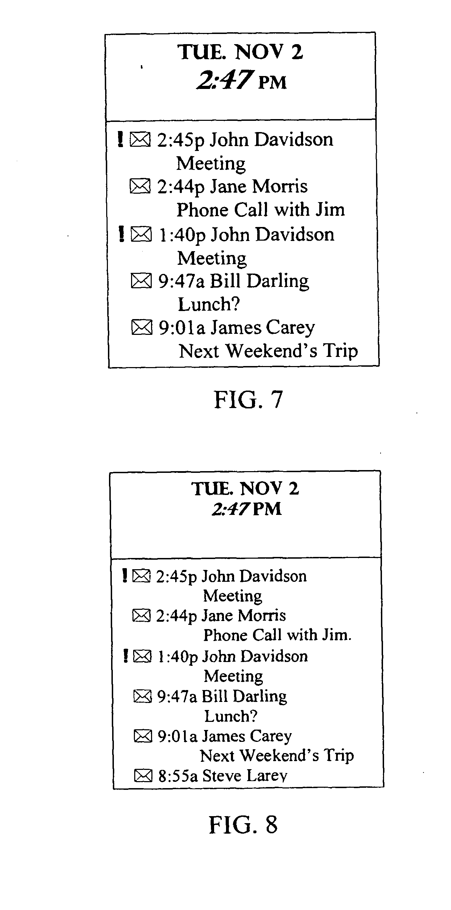

Reference is now made to Figure 7 to show an exemplary email message header list displayed in accordance with an embodiment of the present application. As shown, the user-selected font size is large so that the test case string does not fit into the designated space in the address column. Thus, upon selection of the font size, the subject field is moved to the next line of the list, thereby increasing the width of the designated space for display of the address field. In this example, the font is so large that the left edge of the address field is outside of the first predetermined portion of the display. Thus, rather than aligning the left edge of the subject field with the left edge of the address field, the subject field is shifted left to align with the midpoint of the time column.

Referring now to Figure 8, another exemplary email message header list displayed in accordance with an embodiment is shown. In the present example, the user-selected font size is smaller than the user-selected font size shown in the example of Figure 7. The test case string, however, is determined not to fit in the designated space in the address column. Thus, upon selection of the font size, the decision is made to move the subject field to a second line in the email message header list. In this example, the font size is small enough that the left edge of the address field space falls within the first predetermined portion of the display. Accordingly, the left edge of the subject field is aligned with the left edge of the address field.

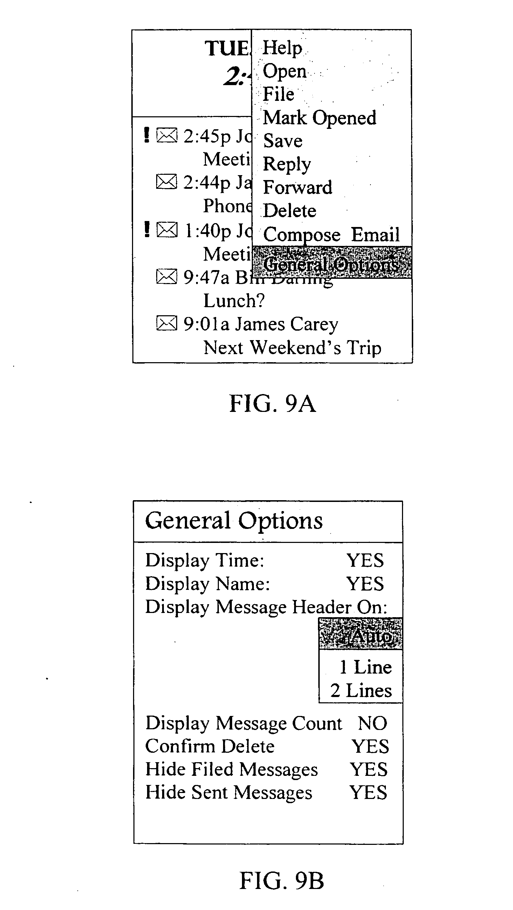

Referring now to Figures 9A and 9B, an exemplary menu showing user options for email and an exemplary submenu showing user options for display of the email message header list, respectively, are shown. Using the exemplary menu and submenu, the user can optionally switch the email message header list to the automatic determination of one or two lines of display for each email header as described above. The user can also optionally switch to a single line of display for all email headers or switch to two lines of display for all email headers. To switch between the email message header display types, the user presses inwardly on the trackwheel 50, in the direction of arrow "A" when the email message headers are displayed, causing display of the email options menu shown in Figure 9A. User selection of General Options from the email options menu of Figure 9A gives rise to display of the General Options submenu of Figure 9B. From this submenu, the user selects the option of Auto, 1 line or 2 lines for display of the email message header. Thus, it is contemplated that the user can switch between display modes.

While the embodiments described herein are directed to particular implementations of the method for displaying an electronic message in a list on a display of an electronic device and to the electronic device, it will be understood that modifications and variations to these embodiments are within the scope and sphere of the present application.

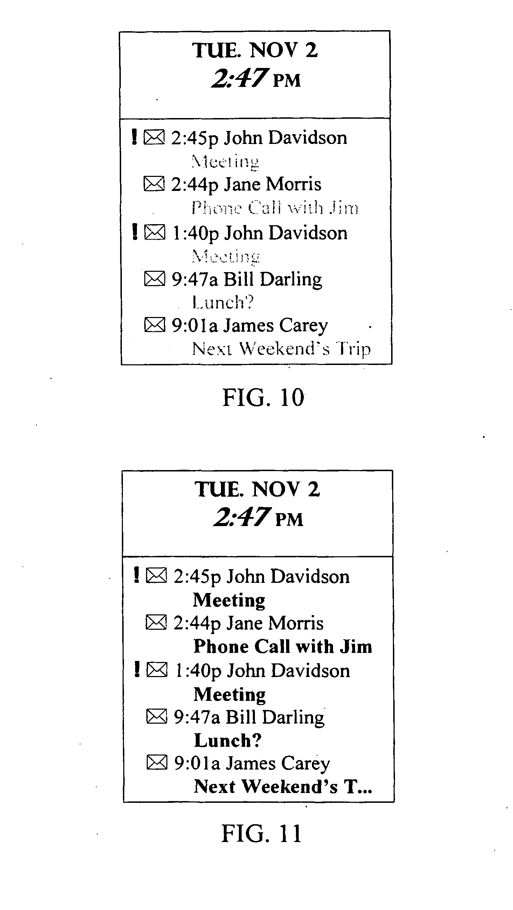

In one exemplary embodiment, the user of the device is provided with user-selectable attribute options for display of the second line of the header list when the device is in Auto or 2 lines header mode. Thus, the user can select an alternative attribute such as an alternative font family, font size, font style, or colour for email headers when the subject field appears on a second line. Referring to Figure 10, there is shown an exemplary email header list, similar to that shown in Figure 7. In the present example, however, the second line of each email header is shown in grey, as selected by the user. Referring to Figure 11, there is shown another exemplary email header list similar to that shown 7. In the present example, however, the second line of each email header is shown in bold, as selected by the user. In each of these examples, the user selects the attributes for the second line for the second line of the email message headers in the list.

In the first described embodiment, the decision as to whether or not to display the subject field on the next line is made based on a comparison of the test case string width with the designated width of the address column. In another embodiment, the decision as to whether or not to display the subject field on the next line is made based on a comparison of a test case string width with the designated width of the subject column. In still another embodiment, the subject field is returned to the first line of the display when all email messages in said list have been opened by the user.

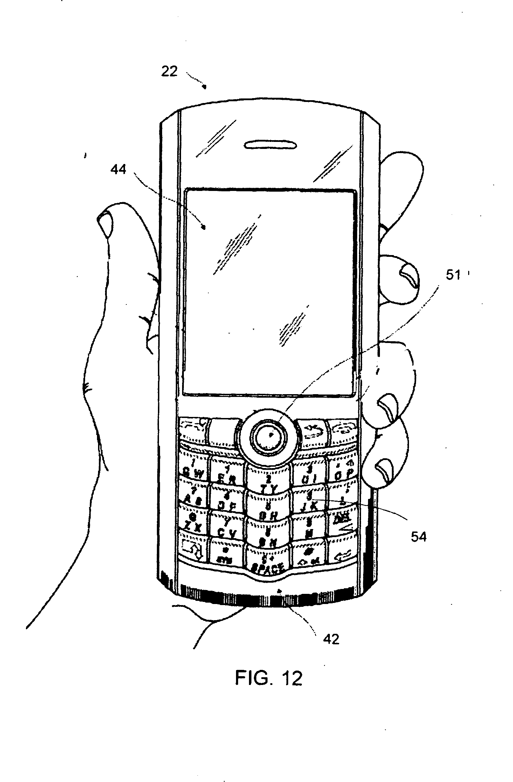

It will be appreciated that the portable electronic device of Figure 2 is shown for exemplary purposes only. Other portable electronic devices such as that shown in Figure 12 are possible. Referring to Figure 12, another exemplary portable electronic device 22 is shown. The portable electronic device 22 includes a housing 42 that frames an LCD display 44. In the present example, however, the portable electronic device 22 includes a trackball 51, rather than a trackwheel. The trackball 51 can be depressed as a means to provide additional user-input. The microprocessor 58 receives input from the trackball 51 which is used for user selection of features from a list or a table on the LCD display 44 of the portable electronic device 42. Selection is carried out by rolling the trackball to roll a cursor (or highlighted region), for example, to the desired selection and pressing inwardly on the trackball. The portable electronic device 22 shown in Figure 12 includes many other features, including, for example, a key pad 54 and other features similar to those described above with reference to Figure 9. It will also be appreciated that reference is made to a trackwheel in the above description for exemplary purposes only, and a trackball 51 such as that shown in Figure 12 can be used.

Many alternatives and variations to the above-described embodiments are possible, for example, many of the options provided in the submenus and the displayed details in the screens shown in the Figures are provided for exemplary purposes and such options and details can vary.

Still many other modifications and variations may occur to those skilled in the art. All such modifications and variations are believed to be within the sphere and scope of the present application.

## Claims

1. A method of controlling a display (44) of an portable electronic device (22) for providing a list of electronic messages, said portable electronic device (22) comprising a microprocessor (58) enabled to output to said display (44), the method executed by said microprocessor and comprising:
dividing a screen of said display (44) into columns in which respective fields of said electronic messages are displayed;
determining a width of a designated space for a predetermined field of said electronic messages in said list based on selected font attributes;
determining a width of a test case string for the predetermined field;
comparing the width for display of the designated space to a minimum width to determine if said width of the designated space is sufficient wherein said comparing said width to a minimum width comprises comparing said width to the determined width of the test case string, and wherein said width is determined to be sufficient if said test string fits within said designated space;
if said width is determined to be sufficient, maintaining said width of said designated space,
otherwise increasing said width of said designated space; and providing said list with data from said field in said designated space for each of said electronic messages,
wherein if said designated space for said field is determined to be insufficient, said method further comprises for each electronic message of said list, providing said field on one line and providing a further field of said electronic messages in said list on a next line in said list.

2. The method according to claim 1, wherein said comparing comprises comparing said width of said test string to a designated address column field width.

3. The method according to any preceding claim, comprising determining said width of said designated space prior to said comparing.

4. The method according to claim 1, wherein said providing said field on one line comprises displaying an address field on said one line and said displaying said further field comprises displaying a subject field on said next line in said list

5. The method according to claim 1 or 4, wherein said providing said further field comprises determining a left edge of said field in said one line in relation to said display (44) of said portable electronic device (22) and locating a left edge of said further field on said next line based on said left edge of said field in said one line.

6. The method according to claim 5, wherein if said left edge of said field in said one line falls within a predetermined first portion of said display (44) of said portable electronic device (22), said further field is located to align said left edge of said further field with said left edge of said field in said one line.

7. The method according to claim 6, wherein if said left edge of said field in said one line does not fall within said predetermined first portion of said display (44) of said portable electronic device (22), said further field is located such that said left edge of said further field is left of alignment with said left edge of said field in said one line.

8. The method according to claim 1 or 4, wherein providing said field in said one line comprises displaying said field in said one line with a first display attribute, and providing said further field on said next line comprises displaying said further field with a second display attribute.

9. The method according to claim 8 wherein said first display attribute comprises at least one of font family, font size, font style and colour, and said second display attribute comprises at least one of font family, font size, font style and colour.

10. The method according to any one of claims 4 to 9, further comprising providing all said fields of one of said electronic messages on a single line in said list after user opening of said one of said messages.

11. A portable electronic device (22) comprising:
a memory (62) for storage of a plurality of electronic messages;
a communications device (66) for receiving and sending electronic messages;
a display device (44) for displaying said electronic messages in a list;
a user input device (50, 54) for user selection and manipulation of said electronic messages; and
a processor (58) connected to the memory, the display device (44), the user input device (50, 54), and the communications device (66), for executing a program stored in the memory (66) to cause the electronic device (22) to perform the method according to any one of claims 1 to 10.

12. A computer program product for displaying an electronic message in a list on a display (44) of a portable electronic device (22), said computer program product comprising a computer-readable medium having computer-readable code embodied therein for implementing in said portable electronic device (22), the method according to any one of claims 1 to 10.

## Patentansprüche

1. Ein Verfahren Steuern einer Anzeige (44) einer tragbaren elektroni-Vorrichtung (22) zum Vorsehen einer Liste von elektronischen Nachrichten, wobei die tragbare elektronische Vorrichtung (22) einen Mikroprozessor (58) aufweist, der aktiviert ist zur Aufgabe an die Anzeige (44), wobei das Verfahren durch den Mikroprozessor ausgeführt wird und aufweist:
Aufteilen eines Bildschirms der Anzeige (44) in Spalten, in denen jeweilige Felder der elektronischen Nachrichten angezeigt werden;
Bestimmen einer Breite eines zugewiesenen Platzes für ein vorgegebenes Feld der elektronischen Nachrichten in der Liste basierend auf ausgewählten Schriftattributen;
Bestimmen einer Breite einer Testzeichenkette für das vorgegebene Feld;
Vergleichen der Breite zur Anzeige des zugewiesenen Platzes mit einer Minimumbreite, um zu bestimmen, ob die Breite des zugewiesenen Platzes ausreichend ist, wobei das Vergleichen der Breite mit einer Minimumbreite aufweist ein Vergleichen der Breite mit der bestimmten Breite der Testzei - und wobei die Breite als ausreichend bestimmt wird, wenn die Testzeichenkette in den zugewiesenen Platz passt;
wenn die Breite als ausreichend bestimmt wird, Beibehalten der Breite des zugewiesenen Platzes,
ansonsten Vergrößern der Breite des zugewiesenen Platzes; und
Vorsehen der Liste mit Daten von dem Feld in dem zugewiesenen Platz für jede der elektronischen Nachrichten,
wobei, wenn der zugewiesene Platz für das Feld als nicht ausreichend bestimmt wird, das Verfahren weiter aufweist, für jede elektronische Nachricht der Liste, ein Vorsehen des Felds in einer Zeile und Vorsehen eines weiteren Felds der elektronischen Nachrichten in der Liste in einer nächsten Zeile der Liste.

2. Das Verfahren gemäß Anspruch 1, wobei das Vergleichen aufweist ein Vergleichen der Breite der Testzeichenkette mit einer zugewiesenen Breite eines Adressspaltefelds.

3. Das Verfahren gemäß einem vorhergehenden Anspruch, das ein Bestimmen der Breite des zugewiesenen Platzes vor dem Vergleichen aufweist.

4. Das Verfahren gemäß Anspruch 1, wobei das Vorsehen des Felds in einer Zeile ein Anzeigen eines Adressfelds in der einen Zeile aufweist und das Anzeigen des weiteren Felds ein Anzeigen eines Betrefi-Felds in der nächsten Zeile der Liste aufweist.

5. Das Verfahren gemäß Anspruch 1 oder 4, wobei das Vorsehen des weiteren Felds aufweist ein Bestimmen eines linken Rands des Felds in der einen Zeile im Verhältnis zu der Anzeige (44) der tragbaren elektronischen Vorrichtung (22) und ein Lokalisieren eines linken Rands des weiteren Felds in der nächsten Zeile basierend auf dem linken Rand des Felds in der einen Zeile.

6. Das Verfahren gemäß Anspruch 5, wobei, wenn der linke Rand des Felds in der einen Zeile in einen vorgegebenen ersten Teil der Anzeige (44) der tragbaren elektronischen Vorrichtung (22) fällt, das weitere Feld angeordnet ist, den linken Rand des weiteren Felds mit dem linken Rand des Felds in der einen Zelle auszurichten.

7. Das Verfahren gemäß Anspruch 6, wobei, wenn der linke Rand des Felds in der einen Zeile nicht in den vorgegebenen ersten Teil der Anzeige (44) der tragbaren elektronischen Vorrichtung (22) fällt, das weitere Feld derart angeordnet ist, dass der linke Rand des weiteren Felds links der Ausrichtung mit dem linken Rand des Felds in der einen Zeile ist.

8. Das Verfahren gemäß Anspruch 1 oder 4, wobei das Vorsehen des Felds in der einen Zeile ein Anzeigen des Felds in der einen Zeile mit einem ersten Anzeigeattribut aufweist und das Vorsehen des weiteren Feld in der nächsten Zeile ein Anzeigen des weiteren Felds mit einem zweiten Anzeigeattribut aufweist.

9. Das Verfahren gemäß Anspruch 8, wobei das erste Anzeigeattribut zumindest eines aus einer Schriftfamilie, einer schrittgröße, einer Schriftart und Farbe aufweist und das zweite Anzeigeattribut zumindest eines aus einer Schriftfamilie, einer Schriftgröße, einer Schriftart und Farbe aufweist.

10. Das Verfahren gemäß einem der Ansprüche 4 bis 9, das weiter aufweist ein Vorsehen aller Felder von einer der elektronischen Nachrichten in einer einzigen Zeile in der Liste, nachdem ein Benutzer die eine der Nachrichten geöffnet hat.

11. Eine tragbare elektronische Vorrichtung (22), die aufweist:
einen Speicher (62) zum Speichern einer Vielzahl von elektronischen Nachrichten;
eine Kommunikationsvorrichtung (66) zum Empfangen und Senden von elektronischen Nachrichten;
eine Anzeigevorrichtung (44) zum Anzeigen der elektronischen Nachrichten in einer Liste;
eine Benutzereingabevorrichtung (50, 54) zur Benutzerauswahl und Manipulation der elektronischen Nachrichten; und
einen Prozessor (58), der mit dem Speicher, der Anzeigevorrichtu ng (44), der Benutzereingabevorrichtung (50, 54) und der Kommunikationsvorrichtung(66) verbunden ist, zum Ausführen eines Programms, das in dem Speicher (66) gespeichert ist, um zu veranlassen, dass die elektronische Vorrichtung (22) das Verfahren gemäß einem der Ansprüche 1 bis 10 durchfährt.

12. Ein Computerprogrammprodukt zum Anzeigen einer elektronischen Nachricht in einer Liste auf einer Anzeige (44) einer tragba ren elektron ischen Vorrichtung (22), wobei das Computerprogrammprodukt ein computerlesbares Medium aufweist, das computerlesbaren Code darin enthalten hat zum Implementieren in der tragbaren elektronischen Vorrichtung (22) des Verfahrene gemäß einem der Ansprüche 1 bis 10.

## Revendications

1. Procédé permettent de commander un afficheur (44) d'un dispositif électronique portable (22) pour fournir une liste de messages électroniques, ledit dispositif électronique portable (22) comprenant un microprocesseur (58) activé pour délivrer en sortie audit afficheur (44), le procédé étant exécuté par ledit microprocesseur et comprenant le fait :
de diviser un écran dudit afficheur (44) en colonnes où des champs respectifs desdits messages électroniques sont affichés ;
de déterminer une largeur d'un espace désigné pour un champ prédéterminé desdits messages électroniques dans ladite liste sur la base d'attributs de police sélectionnés ;
de déterminer une largeur d'une chaîne de cas d'essai pour le champ prédéterminé ;
de comparer la largeur pour l'affichage de l'espace désigné à une largeur minimale peur déterminer si ladite largeur de l'espace désigné est suffisante, ladite comparaison de ladite largeur à une largeur minimale comprenant le fait de comparer ladite largeur à la largeur déterminée de la chaîne de cas d'essai, et ladite largeur étant déterminée comme étant suffisante si ladite chaîne d'essai correspond audit espace désigné ;
de maintenir, si ladite largeur est déterminée comme étant suffisante, ladite largeur dudit espace désigné,
d'augmenter, dans le cas contrainre, ladite largeur dudit espace désigné ; et
de fournir, à ladite liste, des données à partir dudit champ dans ledit espace désigné pour chacun desdits messages électroniques,
si ledit espace désigné pour ledit champ est déterminé comme étant insuffisant, ledit procécé comprenant en outre pour chaque message électronique de ladite liste, le fait de fournir ledit champ sur une ligne et de fournit un champ supplémentaire desdits messages électroniques dans ladite liste sur une ligne suivante dans ladite liste.

2. Procédé selon la revendication 1, dans lequel ladite comparaison comprend le fait de comparer ladite largeur de ladite chaîne d'essai à une largeur désignée de champ de colonne d'adresse.

3. Procédé selon l'une des revendications précédentes, comprenant la détermination de ladite largeur dudit espace désigné avant ladite comparaison.

4. Procédé selon la revendication 1, dans lequel ledit fait de fournir ledit champ sur une ligne comprend l'affichage d'un champ d'adresse sur ladite une ligne et ledit affichage dudit champ supplémentaire comprend l'affichage d'un champ d'objet sur ladite ligne suivante dans ladite liste.

5. Procédé selon la revendication 1 ou 4, dans lequel ledit fait de fournir ledit champ supplémentaire comprend la détermination d'un bord gauche dudit champ dans ladite une ligne par rapport audit afficheur (44) dudit dispositif électronique portable (22) et la localisation d'un bord gauche dudit champ supplémentaire sur ladite ligne suivante sur la base dudit bord gauche dudit champ dans ladite une ligne.

6. Procédé selon la revendication 5, dans lequel si ledit bord gauche dudit champ dans ladite une ligne se trouve à l'intérieur d'une première partie prédéterminé dudit afficheur (44) dudit dispositif électronique portable (22), ledit champ supplémentaire est situé de manière à aligner ledit bord gauche dudit champ supplémentaire avec ledit bord gauche dudit champ dans ladite une ligne.

7. Procédé selon la revendication 6, dans lequel si ledit bord gauche dudit champ dans ladite une ligne ne se trouve pas à l'intérieur de ladite première partie prédéterminée dudit afficheur (44) dudit dispositif électronique portable (22), ledit champ supplémentaire est situé de sorte que ledit bord gauche dudit champ supplémentaire soit à gauche de l'alignement avec ledit bord gauche dudit champs dans ladite une ligne.

8. Procédé selon la revendication 1 ou 4, dans lequel le fait de fournir ledit champ dans ladite une ligne comprend l'affichage dudit champ dans ladite une ligne avec un premier attribut d'affichage, et le fait de fournir ledit champ supplémentaire sur ladite ligne suivante comprend l'affichage dudit champ supplémentaire avec un deuxième attribut d'affichage.

9. Procédé selon, la revendication 8, dans lequel ledit premier attribut d'affichage comprend au moins l'un d'une famille de police, d'une taille de police, d'un style de police et d'une couleur, et ledit deuxième attribut d'affichage comprend au moins l'un d'une famille de police, d'une taille de police, d'un style de police et d'une couleur.

10. Procédé selon l'une quelconque des revendications 4 à 9, comprenant en outre le fait de fournir tous lesdits champs de l'un desdits messages électroniques sur une seule ligne dans ladite liste après l'ouverture dudit message parmi lesdits messages par l'utilisateur.

11. Dispositif électronique portable (22) comprenant :
une mémoire (62) destinée à stocker une pluralité de messages électroniques ;
un dispositif de communications (66) destiné à recevoir et envoyer des messages électroniques ;
un afficheur (44) destiné à afficher lesdits messages électroniques dans une liste ;
un dispositif d'entrée utilisateur (50, 54) destiné à la sélection et la manipulation desdits messages électroniques par l'utilisateur ; et
un professeur (58) connecté à la mémoire, à l'afficheur (44), au dispositif d'entrée utilisateur (50, 54), et au dispositif de communications (66), destiné à exécuter un programme stocké dans la mémoire (66) afin d'amener le dispositif électronique (22) à mettre en oeuvre le procédé selon l'une quelconque des revendications 1 à 10.

12. Produit de programme informatique destiné à afficher un message électronique dans une liste sur un afficheur (44) d'un dispositif électronique portable (22), ledit produit de programme informatique comprenant un support lisible par ordinateur ayant un code lisible par ordinateur incorporé dedans pour mettre en oeuvre, dans ledit dispositif électronique portable (22), le procédé selon l'une quelconque des revendications 1 à 10.
